Europäisches Patentamt

(19) **European Patent Office**

Office européen des brevets

(11) Veröffentlichungsnummer: **0 158 948**
**B1**

(12) **EUROPÄISCHE PATENTSCHRIFT**

(45) Veröffentlichungstag der Patentschrifft:
28.02.90

(51) Int. Cl.⁵: **G 01 N 21/05**

(21) Anmeldenummer: **85104199.6**

(22) Anmeldetag: **06.04.85**

(54) Durchflussküvette mit ni-Volumen.

(30) Priorität: **14.04.84 DE 3414260**

(43) Veröffentlichungstag der Anmeldung:
**23.10.85 Patentblatt 85/43**

(45) Bekanntmachung des Hinweises auf die Patenterteilung:
**28.02.90 Patentblatt 90/09**

(84) Bennante Vertragsstaaten:
**CH DE FR GB IT LI NL SE**

(56) Entgegenhaltungen:
**EP-A-0 075 605**
**DE-U-7 333 009**
**GB-A-2 071 355**
**US-A-3 999 867**

(73) Patentinhaber: **Firma Carl Zeiss**
**D-7920 Heidenheim (Brenz) (DE)**
(84) Bennante Vertragsstaaten: **CH DE FR IT LI NL SE**

(73) Patentinhaber: **CARL-ZEISS-STIFTUNG trading as CARL ZEISS**
**D-7920 Heidenheim (Brenz) (DE)**
(84) Bennante Vertragsstaaten: **GB**

(72) Erfinder: **Mächler, Meinrad**
**Sulzgasse 2**
**D-7090 Ellwangen (DE)**
Erfinder: **Sachse, Richard, Dipl.-Ing. (FH)**
**Ulmenweg 21**
**D-7923 Königsbronn (DE)**
Erfinder: **Schlemmer, Harry, Dr. rer. nat. Dipl.-Phys.**
**Fichtestrasse 63**
**D-7080 Aalen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die vorliegende Erfindung betrifft eine zusammensetzbare Durchflußküvette. Sie betrifft insbesondere eine Durchflußküvette mit äußerst geringem Volumen, d. h. mit einem Meßvolumen von wenigen nl. Derartige Küvetten sind z. B. für die Mikro-Hochdruckflüssigkeitschromatographie (Mikro-HPLC) vorteilhaft.

Die geringen Volumen der Mikro-HPLC verlangen bei Querschnitten der Meßstrahlung von einem bis wenigen mm² eine Schichtdicke im Bereich von wenigen bis ca. 100 µm. Küvetten mit derartigen Schichtdicken sind aus der Infrarot–Analysentechnik an Flüssigkeiten bekannt. Diese Küvetten haben im allgemeinen zwei Fenster aus planparallelen Platten, die durch ein Abstandsstück entsprechender Dicke voneinander getrennt sind. Die Anordnung sitzt in einem meist zylinderförmigen Gehäuse, das einen Einlaß und einen Auslaß für die Flüssigkeit hat. Derartige Küvetten sind z. B. in der DE-PS-1 648 917 und in der US-PS-3 090 861 beschrieben. Ihr Nachteil besteht in der etwas umständlichen Handhabung und der schlechten Reproduzierbarkeit durch das verhältnismäßig dünne Abstandsstück. Außerdem ist es schwierig, sie bei den in der HPLC vorkommenden Drücken von 100 bis 1000 bar dicht zu bekommen.

Aus der DE-PS-2 158 220 ist eine Durchflußküvette bekannt, welche aus mindestens 3 planparallelen Platten aufgebaut ist, wobei die mittlere Platte einen Ausschnitt aufweist, der den Meßraum und den Ein- und Auslaß bestimmt. Diese Küvette ist jedoch nicht für ein sehr kleines Meßvolumen, d. h. für eine sehr geringe Schichtdicke geeignet, weil dann die mittlere Platte so dünn sein müßte, daß sie nicht mehr herstellbar bzw. handhabbar sein würde.

Der vorliegenden Erfindung liegt daher die Aufgabe zugrunde, eine Küvette zu schaffen, welche ein sehr kleines Meßvolumen, d. h. eine sehr geringe Schichtdicke hat, auch bei hohen Drucken dicht ist und möglichst einfach zu handhaben ist.

Die gestellte Aufgabe wird erfindungsgemäß dadurch gelöst, daß der Küvettenkörper aus zwei Küvettenhälften, aufgebaut ist, daß die Küvettenhälften mit Planflächen aufeinandergesetzt sind und daß in die Planflächen konvexe Vertiefungen für den Meßraum sowie Zu- und Abführungskanäle eingearbeitet sind.

In einer vorteilhaften Ausführungsform sind die konvexen Vertiefungen in Richtung der Zu- und Abführungskanäle gegeneinander versetzt. Dadurch wird erreicht, daß die Schichtdicke in dem für die Meßstrahlung vorgesehenen Bereich annähernd konstant ist und eine im allgemeinen vernachlässigbare optische Wirkung des Meßraumes eintritt.

Es ist möglich, die beiden Hälften in ihren geometrischen Abmessungen genau gleich auszuführen und sie um 180° gegeneinander verdreht aufeinander zu setzen.

In einer besonders vorteilhaften Ausführungsform werden die konvexen Vertiefungen sphärisch ausgeführt.

Es ist zweckmäßig, die beiden Hälften so auszuführen, daß sie zusammengesetzt einen spindelförmigen Küvettenkörper ergeben, welcher an den äußeren Enden der Zu- und Abführungskanäle konisch ausgebildet ist.

Mindestens eine der beiden Küvettenhälften ist aus optisch durchlässigem Material, z. B. aus Glas, Quarz oder Saphir. Wenn die Küvette in optischen Vorrichtungen verwendet wird, bei denen das reflektierte Licht gemessen wird, dann kann die zweite Küvettenhälfte aus optisch undurchlässigem Material sein. Es ist in diesem Fall zweckmäßig ein Material mit guter Wärmeleitfähigkeit zu nehmen, wenn die Probe temperiert werden soll.

Weitere vorteilhafte Ausgestaltungen der Erfindung gehen aus den abhängigen Ansprüchen hervor.

Die Erfindung wird im folgenden anhand von in den Figuren 1 bis 5 dargestellten Ausführungsbeispielen näher erläutert. Dabei zeigen:

Fig. 1   eine perspektivische Darstellung des auseinandergenommenen Küvettenkörpers;

Fig. 2a   eine Ansicht des Küvettenkörpers aus der Richtung der einfallenden Strahlung;

Fig. 2b   einen Schnitt durch die Fig. 2a;

Fig. 3a   eine Hilfseinrichtung zum exakten Aufeinandersetzen der Küvettenhälften;

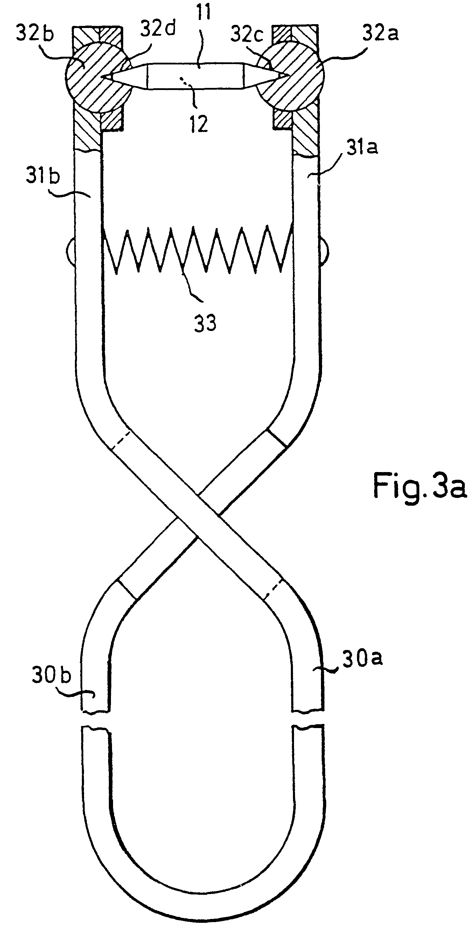

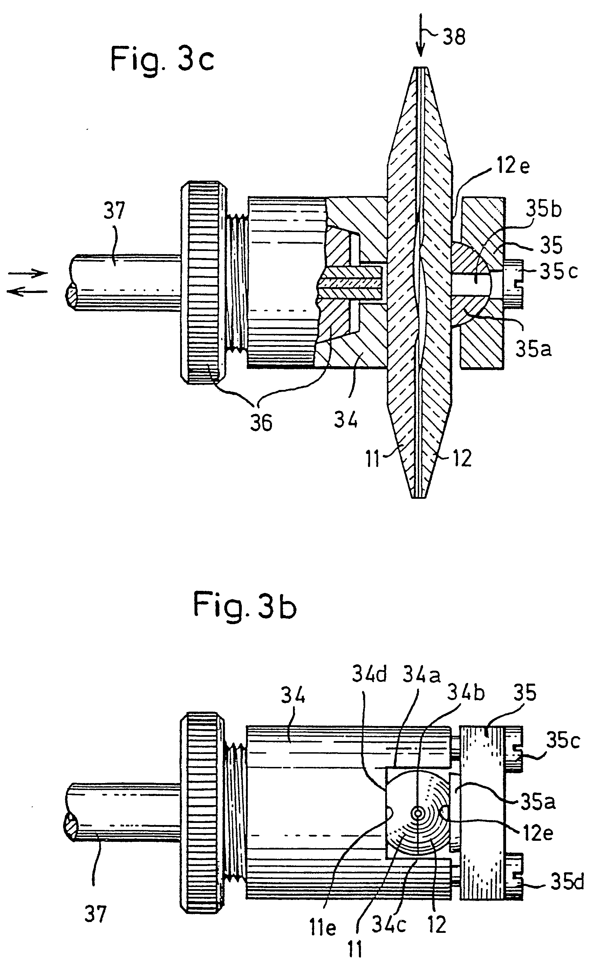

Fig. 3   beinen Küvettenhalter für die beiden Hälften des Küvettenkörpers;

Fig. 3c   einen Schnitt durch Fig. 3b;

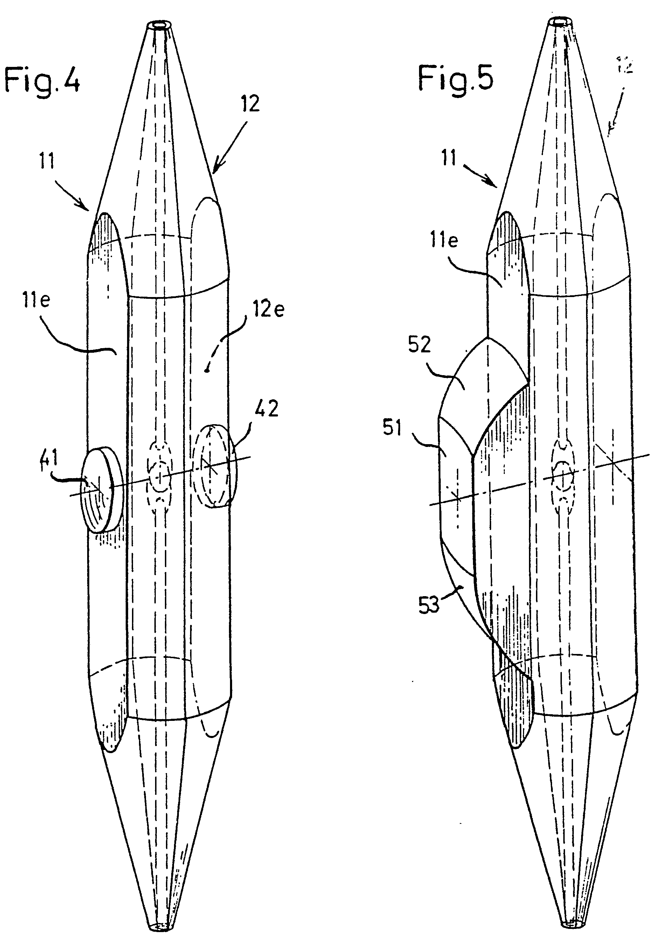

Fig. 4   eine Ausgestaltung des Küvettenkörpers als optischen Resonator für Absorptionsmessungen und

Fig. 5   eine Ausgestaltung des Küvettenkörpers als optischen Resonator für Reflexionsmessungen.

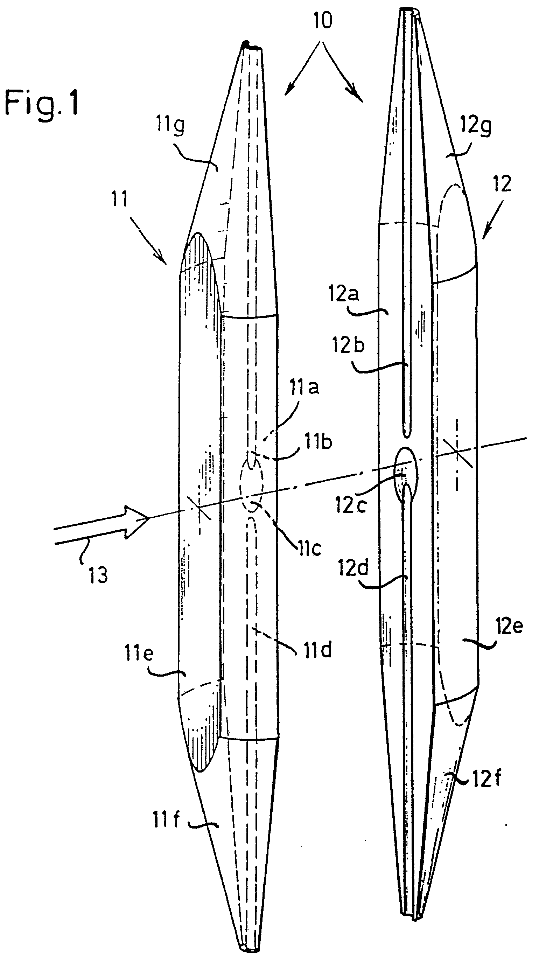

In Figur 1 ist mit 10 ein Küvettenkörper bezeichnet, der aus den beiden Küvettenhälften 11 und 12 besteht, die hier der Übersichtlichkeit halber mit einem Abstand voneinander gezeichnet sind. In die Planflächen 11a und 12a der Küvettenhälften 11 und 12 sind die Zuführungskanäle 11b und 12b, die konvexen Vertiefungen 11c und 12c und die Abführungskanäle 11d und 12d eingearbeitet, durch welche die Flüssigkeit oder das Gas im zusammengesetzten Zustand strömt. Die Planflächen 11a und 12a haben optische Oberflächenqualität, so daß der Küvettenkörper 10 im zusammengesetzten Zustand auch bei großen Druck flüssigkeitsdicht und bei normalen Druck gasdicht ist.

Die Küvettenhälften haben plane Außenflächen 11e und 12e, welche parallel zu den Planflächen 11a und 12a sind. Zusammengesetzt ergeben die Küvettenhälften einen spindelförmigen Küvettenkörper 10, der an den äußeren Enden der Kanäle 11b, 12b, 11d und 12d die Form eines Konus 11f und 12f, 11g und 12g zum Anschluß von Zu- und Abführungsleitungen hat.

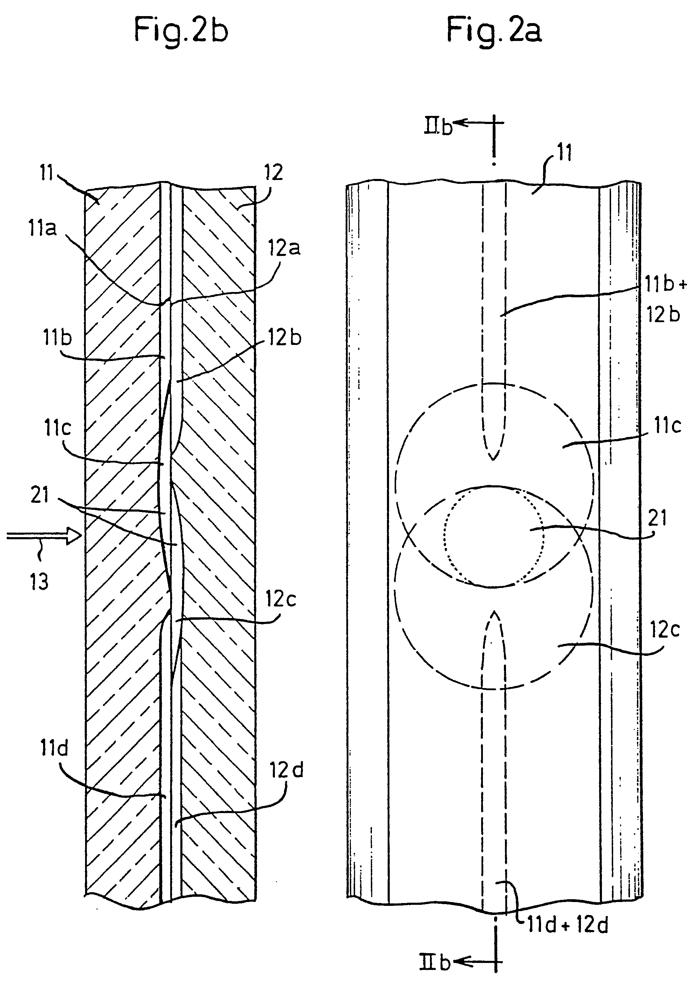

Figur 2a zeigt eine Teilansicht des Küvettenkörpers 10 gesehen aus der in Figur 1 mit 13 bezeichneten Einfallsrichtung für die Meßstrahlung und Figur 2b zeigt einen Schnitt durch die Teilansicht von Fig. 2a. Man erkennt aus diesen beiden Figuren deutlich, daß die konvexen Vertiefungen 11c und 12c in Richtung der Kanäle 11b, 12b, 11d und 12d gegeneinander versetzt angeordnet sind, so daß der für die Meßstrahlung vorgesehene Querschnitt 21 eine annähernd konstante Schichtdicke aufweist. Wenn für die konvexen Vertiefungen 11c und 12c sphärische Flächen verwendet werden, deren Mittelpunkte um den halben Durchmesser der Vertiefungen versetzt sind, dann ergibt sich für eine Küvette mit den weiter unten angegebenen Abmessungen durch die nicht planparallelen Begrenzungsflächen im Querschnitt 21 je nach Brechzahl der Probe eine Brennweite zwischen −0,5 und −1,0 m. Eine derartige optische Wirkung hat bei den meisten Anwendungsfällen keinen nennenswerten störenden Einfluß.

Der beschriebene Küvettenkörper kann z. B. mit folgenden Abmessungen ausgeführt werden: Gesamtlänge 25 mm, Durchmesser 8 mm, Abstand zwischen Planflächen 11e und 12e 6 mm, Radius der sphärischen Vertiefungen 500 bis 1000 mm, Mittentiefe der sphärischen Vertiefungen 3 bis 10 µm, Durchmesser des Querschnittes 21 für Meßstrahlung 1 bis 3 mm, Durchmesser der Kanäle 0, 1 bis 0,5 mm. Zweckmäßigerweise werden die Abmessungen der Kanäle und die Abmessungen der konvexen Vertiefungen so aufeinander abgestimmt, daß der Strömungsquerschnitt annähernd konstant bleibt.

Für eine einwandfreie Funktion der Küvette ist es notwendig, daß die Küvettenhälften 11 und 12 exakt aufeinander gesetzt werden. Hierzu dient die in Abbildung 3a dargestellte Hilfsvorrichtung in Form einer Justierzange. Durch Druck auf ihre Stellen 30a und 30b gehen ihre Enden 31a und 31b auseinander. An diesen Enden sitzen drehbar gelagerte Kugeln 32a und 32b, welche z. B. aus Teflon sind und Konen 32c und 32d haben. Der Winkel der Konen entspricht genau den Konen 11g, 12g und 11f, 12f der Küvettenhälften 11 und 12; ihre Spitzen liegen in den Mittelpunkten der Kugeln 32a und 32b. Die beiden Küvettenhälften 11 und 12 werden aufeinander gelegt und dann so wie in Figur 3a dargestellt in die Justierzange eingesetzt. Nach Beendigung des Druckes an den Stellen 30a und 30b werden die Enden 31a und 31b unterstützt durch die Feder 33 zusammengezogen und bewirken durch ihre Konen 32c und 32d, daß die Küvettenhälften 11 und 12 zueinander in die exakt richtige Lage kommen.

Anschließend werden die noch in der Justier-zange gehaltenen Küvettenhälften 11 und 12 in den Küvettenhalter eingesetzt. Die Figuren 3b und 3c zeigen eine Ausführungsform eines derartigen Küvettenhalters. Dieser besteht aus einem zylindrischen Grundkörper 34, in den eine Aussparung 34a eingefräst ist, welche so breit ist, daß die Küvettenhälften 11 und 12 an den Stellen 34b und 34c gerode mit etwas Spiel (ca. 0, 1 mm) hineinpassen. Die Planfläche 11e der Küvettenhälfte 11 liegt dabei auf dem Boden 34d der Einfräsung 34a auf. Auf die ihr gegenüberliegende Planfläche 12e der anderen Küvettenhälfte 12 wird das Teil 35 aufgesetzt, welches einen drehbar gelagerten, halbkugelförmigen Einsatz 35a hat und mit den Schrauben 35c und 35d am Grundkörper 34 befestigt wird. Durch den halbkugelförmigen Einsatz 35a werden die Küvettenhälf-ten 11 und 12 auch dann einwandfrei zusammengedrückt, wenn das Teil 35 beim Anschrauben etwas verkantet wird.

Wenn die beiden Küvettenhälften 11 und 12 aus Saphir sind, wird das halbkugelförmige Teil 35a zweckmäßigerweise auch aus Saphir und das Teil 35 aus Aluminium- oder Siliziumnitrid gemacht um eine gute Drehbarkeit der Teile zueinander zu erreichen. Es ist selbstverständlich, daß durch nicht gezeichnete mechanische Hilfs-mittel beim Einsetzen der Küvettenhälften 11 und 12 mit der Justierzange in den Grundkörper 34 auch für eine genaue Justierung in der Durchflußrichtung 38 gesorgt werden kann, so daß der Meßraum 21 an die richtige Stelle kommt.

In dem in den Figuren 3b und 3c dargestellten Ausführungsbeispiel einer Halterung für die Küvette wird das Meßlicht durch einen Lichtleiter 37 zu- und abgeführt, welcher mit der Spannzange 36 am Grundkörper 34 fixiert ist. In diesem Falle ist es günstig, das halbkugelförmige Teil 35a und das Teil 35 mit einer Bohrung 35b zu versehen, damit an der Fläche 12e keine störende Reflexion des Meßlichtes eintritt. Es ist selbstverständlich auch möglich, die Küvette im Durchlicht und/oder ohne Lichtleiter zu verwenden.

Wenn – wie bei dem in den Figuren 3b und 3c dargestellten Ausführungbeispiel – das reflektierte Licht gemessen wird, dann muß nur die Küvettenhälfte 11 aus optisch durchlässigem Material sein. In einer vorteilhaften Ausführungsform ist daher die Küvettenhälfte 12 aus einem Material mit guter Wärmeleitfähigkeit, das sich bearbeiten und polieren läßt, z. B. aus Berylliumoxyd oder Aluminiumnitrid. Damit seine Oberfläche mindestens im Bereich 21 ungefähr das gleiche Reflexionsvermögen hat, wie das für die Küvettenhälfte 11 verwendete optisch durchlässige Material, kann eine Spiegelschicht aus Platin, Iridium oder Rhodium aufgedampft oder galvanisch aufgebracht werden. In diesem Fall ist es zweckmäßig, auch das halbkugelförmige Teil 35a aus Berylliumoxyd oder Aluminiumnitrid zu machen (und die Bohrung 35b wegzulassen). Das Teil 35 ist in diesem Fall z. B. aus einer besonders bruchfesten Keramik z. B. Siliziumnitrid oder aus Hartmetall. Es kann in einer weiteren Ausgestaltung der Erfindung mit einem guten Wärmekontakt zu einer (nicht gezeichneten) Temperaturregelungseinrichtung ausgebildet sein. In vielen Anwendungsfällen reicht durch die kleinen Probenvolumina jedoch die Wärmekapazität der Küvettenhälfte 12 und der Teile 35a und 35 schon für eine ausreichende Temperaturkonstanz aus; entscheidend ist der gute Wärmekontakt zu der verhältnismäßig dünnen Flüssigkeits- oder Gasschicht auf der Oberfläche 12a.

Die bisher beschriebenen Ausführungsformen der Küvette sind in erster Linie für interferometrische Brechzahlmessungen vorgesehen. (Eine hierfür geeignete Vorrichtung ist in unserer am gleichen Tag eingereichten Anmeldung EP-A-0 163 847 mit dem Titel "Interferenz–Refraktometer" beschrieben). Eine zweckmäßige Ausgestaltung der erfindungsgemäßen Küvette für Absorptionsmessungen ist in Figur 4 dargestellt. Infolge der sehr geringen Schichtdicke reicht bei Absorptionsmessungen ein einfacher oder doppelter Durchgang der Meßstrahlung nicht aus um eine ausreichende Empfindlichkeit zu erzielen. Daher sind auf die planparallelen Außenflächen 11e und 12e plankonvexe Linsenkörper 41 und 42 aus dem gleichen Material, aus dem die Küvettenhälften 11 und 12 sind, aufgekittet oder besser aufgesprengt, deren sphärische Oberflächen mit Schichten mit hohem Reflexionsvermögen und definierter Restdurchlässigkeit (z. B. 0,95/0,05) belegt sind. Die Radien der sphärischen Flächen sind dabei so auf den optischen Weg zwischen ihnen, also auf den Abstand der Scheitelpunkte der sphärischen Flächen, abgestimmt, daß sich ein konfokaler optischer Resonator ergibt. Auf diese Weise erholt man ein Absorptionsspektrum, dessen Bandentiefe bei gegebenen Extinktionskoeffizienten von der "Finesse" des Resonators abhängt.

In Fällen mit extrem hohen Extinktionskoeffizienten kann es zweckmäßig sein, an Stelle eines vielfachen Durchganges durch die Probe eine Vielfachreflexion an der Probenoberfläche vorzunehmen. Eine hierfür zweckmäßige Ausgestaltung der erfindungsgemäßen Küvette zeigt Figur 5. Auf die Planfläche 11e der Küvettenhälfte 11 ist ein trapezförmiger Prismenkörper 51 aus dem gleichen Material, aus dem die Küvettenhälfte 11 ist, aufgekittet oder besser aufgesprengt. Die beiden geneigten Trapezflächen 52 und 53 sind sphärische, verspiegelte Flächen, die einen optischen Resonator mit einer Totalreflexionszone an der Probenoberfläche in der Mitte des Resonators bilden. In diesem Fall erhält man ein ATR-Spektrum der Probe.

Bei der Herstellung der Küvette kommt es darauf an, daß die beiden Küvettenhälften 11 und 12 genau aufeinander passen, zusammen einen exakten Küvettenkörper 10 ergeben und daß die konvexen Vertiefungen die richtige Lage und Mittentiefe erhalten. Dies wird durch folgende Schritte bei der Herstellung erreicht: Zunächst werden zwei Halbzylinder hergestellt und deren Planflächen werden sorgfältig bis zu einer optischen Oberflächenqualität bearbeitet. Diese Planflächen werden dann aufeinandergesprengt und in diesem Zustand werden die äußere Zylinderform und die Konen an den beiden Enden exakt hergestellt. Anschließend werden die Küvettenhälften wieder auseinander genommen und die planen Außenflächen 11e und 12e werden hergestellt. Als nächster Schritt werden die Zu- und Abführungskanäle 11b, 12b, 11d und 12d mit einem Diamantwerkzeug in die Küvettenhälften eingefräst. Für die Einarbeitung der konvexen Vertiefungen wird jede Küvettenhälfte mit ihrer Planfläche 11e bzw. 12e auf eine Planplatte aufgesprengt oder aufgekittet und neben ihren Längsseiten werden in einem nicht zu großen Abstand zwei quaderförmige Streifen aufgesprengt oder aufgekittet, die etwas höher und aus einem weicheren Material sind als die Küvettenhälfte. Wenn z. B. die Küvettenhälften aus synthetischen Saphir sind, kann für die quaderförmigen Streifen normales Glas verwendet werden. Jetzt wird ein Schleif- oder Polierwerkzeug eingesetzt, das den Sollradius der sphärischen Vertiefung hat und ein Schleif- oder Poliermittel verwendet, welches die quaderförmigen Glasstreifen abträgt aber an der Küvettenhälfte aus dem wesentlich härteren Saphir keinen Abtrag bewirkt (z. B. Ceroxyd oder Eisenoxyd). Der entsprechende Schleif- oder Poliervorgang endet dann zwangsläufig, wenn das Schleif- oder Polierwerkzeug die Saphirfläche berührt. Nun wird in die aus den quaderförmigen Streifen herausgearbeiteten sphärischen Ringflächen ein Prüfglas mit dem Sollradius eingesetzt. Dieses berührt die Planfläche der Küvettenhälfte aus Saphir in einem Punkt, um den man bei geeigneter Beleuchtung eine Interferenzfigur aus konzentrischen Kreisen sieht. Jetzt wird die Küvettenhälfte relativ zu den quaderförmigen Streifen so ausgerichtet, daß der Berührungspunkt genau an diejenige Stelle kommt, an welcher die sphärische Vertiefung im Küvettenkörper ihre tiefste Stelle bekommen soll. Nach dieser Ausrichtung erfolgt der weitere Abtrag gemeinsam in der Küvettenhälfte und den quaderförmigen Streifen. Wegen der geringen Mittentiefe der sphärischen Vertiefung kommt hierfür nur ein Poliervorgang infrage, für den jetzt als Poliermittel z. B. Diamantpaste oder Bornitrid verwendet wird. Der Durchmesser der dabei in die Küvettenhälfte einpolierten sphärischen Fläche wird von Zeit zu Zeit mit dem Prüfglas kontrolliert; dort wo ein Abtrag erfolgt ist, treten keine Interferenzstreifen mehr auf. Der auf diese Weise bestimmte Durchmesser kann in die jeweils erreichte Mittentiefe umgerechnet werden.

Für die Erzeugung von asphärischen Vertiefungen ist es zweckmäßig, nur den letzten Poliervorgang entsprechend abzuändern. Für diesen können die aus der Herstellung von asphärischen und multifokalen Brillengläsern bekannten Verfahren und Vorrichtungen angewendet werden.

## Patentansprüche

1. Zusammensetzbare Durchflußküvette mit mindestens einem Teil aus optisch durchlässigem Material, dadurch gekennzeichnet, daß der Küvettenkorper (10) aus zwei Küvettenhälften (11, 12) aufgebaut ist, daß die Küvettenhälften (11, 12) mit Planflächen (11a, 12a) aufeinandergesetzt sind und daß in die Planflächen (11a, 12a) konvexe Vertiefungen (11c, 12c) für den Meßraum (21) sowie Zu- und Abführungskanäle (11b, 11d, 12b, 12d) eingearbeitet sind.

2. Durchflußküvette nach Anspruch 1, dadurch gekennzeichnet, daß die konvexen Vertiefungen (11c, 12c) in Richtung der Zu- und Abführungskanäle (11b, 12b, 11d, 12d) gegeneinander versetzt sind. Durchflußküvette nach Anspruch 1 oder 2, dadurch gekennzeichnet, daß die zwei Küvettenhälften (11, 12) in ihren geometrischen Abmessungen gleich sind und um 180° gegeneinander verdreht angeordnet sind.

4. Durchflußküvette nach einem der Ansprüche 1 bis 3, dadurch gekennzeichnet, daß die konvexen Vertiefungen (11c, 12c) sphärisch sind.

5. Durchflußküvette nach einem der Ansprüche 1 bis 4, dadurch gekennzeichnet, daß die Küvettenhälften (11, 12) so ausgebildet sind, daß sie zusammengesetzt einen spindelförmigen Küvettenkörper (10) mit teilweise planparallelen Außenflächen (11e, 12e) ergeben, der an den äußeren Enden der Zu- und Abführungskanäle ( 11b, 12b, 11d, 12d) in Form von Konen (11g, 12g, 11f, 12f) ausgebildet ist.

6. Durchflußküvette nach einem der Ansprüche 1 bis 5, dadurch gekennzeichnet, daß mindestens eine Küvettenhälfte (11, 12) aus Glas, Quarz oder Saphir ist.

7. Durchflußküvette nach einem der Ansprüche 1 bis 6, dadurch gekennzeichnet, daß auf die planparallelen Außenflächen (11e, 12e) plankonvexe Linsen (41, 42) aufgekittet oder aufgesprengt sind, deren sphärische Oberflächen mit Schichten von hohen Reflexionsvermögen und definierter Restdurchlässigkeit belegt sind.

8. Durchflußküvette nach einem der Ansprüche 1 bis 7, dadurch gekennzeichnet, daß auf eine plane Außenfläche (11e) ein trapezformiger Prismenkörper (51) aufgesprengt oder aufgekittet ist, dessen zueinander geneigte Trapezflächen (52, 53) sphärisch ausgebildet sind und mit Schichten von hohem Reflexionsvermögen und definierter Restdurchlässigkeit belegt sind.

9. Durchflußküvette nach einem der Ansprüche 1 bis 6 oder nach Anspruch 8, dadurch gekennzeichnet, daß eine Küvettenhälfte (12) aus Berylliumoxyd oder Aluminiumnitrid ist und mindestens auf der konvexen Vertiefung (12c) mit einer Schicht aus Platin, Iridium oder Rhodium versehen ist.

10. Durchflußküvette nach Anspruch 9, dadurch gekennzeichnet, daß die Küvettenhälfte (12) mit einer Temperaturregelungseinrichtung verbunden ist.

## Claims

1. Through-flow cuvette which can be assembled, with at least one part of an optical transparent material, characterized in that the cuvette body (10) consists of two cuvette body halves (11, 12), that the cuvette body halves (11, 12) are placed one against the other with planar surfaces (11a, 12a) and that in the planar surfaces (11a, 12a) convex recesses (11c, 12c) for the measuring space (21) as well as inlet and out let channels (11b, 11d, 12b, 12d) are formed.

2. Through-flow cuvette according to claim 1, characterized in that the convex recesses (11c, 12c) are displaced with respect to each other in the direction of the inlet and out let channels (11b, 12b, 11d, 12d).

3. Through-flow cuvette according to claims 1 or 2, characterized in that both cuvette body halves (11, 12) have the same identical geometric dimensions and are placed rotated by 180° toward one another.

4. Through-flow cuvette according to claims 1 to 3, characterized in that the convex recesses (11c, 12c) are spherical.

5. Through-flow cuvette according to claims 1 to 4, characterized in that the cuvette body halves (11, 12) are so configured that they conjointly define a spindleshaped cuvette (10) with partially planar outer surfaces (11e, 12e) parallel to each other which has on the outer ends of the inlet and outlet channels (11b, 12b, 11d, 12d) conical surfaces (11g, 12g, 11f, 12f).

6. Through-flow cuvette according to claims 1 to 5, characterized in that at least one of the cuvette body halves (11, 12) is of glass, quartz or sapphire.

7. Through-flow cuvette according to claims 1 to 6, characterized in that on the planar outer surfaces (11e, 12e) planar-convex lenses (41, 42) are mounted or wringed, the spherical surfaces of which are coated with layers having a high reflectivity and defined residual transparency.

8. Through-flow cuvette according to claims 1 to 7, characterized in that on one planar outer surface (11e) a trapezoidally formed prism (51) is mounted or wringed, the inclined toward each other trapezoidal surfaces (52, 53) of which having spherical surfaces and are coated with layers having a high reflectivity and defined residual transparency.

9. Through-flow cuvette according to claims 1 to 6 or to claim 8, characterized in that one cuvette body halve (12) is of beryllium oxide or aluminium nitride and at least the convex recess (12c) is coated with a layer of platinum, iridium or rhodium.

10. Through-flow cuvette according to claim 9, characterized in that the cuvette body halve (12) is connected with a temperature control device.

**Revendications**

1. Cuve ou cellule composée, à écoulement, comprenant au moins une pièce en matériau optiquement transparent, caractérisée en ce que le corps de cuve (10) est constitué de deux demi-cuves (11, 12), que les demi-cuves (11, 12) sont appliquées l'une contre l'autre par des faces planes (11a, 12a) et que des creux convexes (11c, 12c) pour la chambre de mesure (21), ainsi que des canaux d'alimentation et d'évacuation (11b, 11d, 12b, 12d), sont usinés dans les faces planes (11a, 12a).

2. Cuve selon la revendication 1, caractérisée en ce que les creux convexes (11c, 12c) sont mutuellement décalés en direction des canaux d'alimentation et d'évacuation (11b, 12b, 11d, 12d).

3. Cuve selon la revendication 1 ou 2, caractérisée en ce que les deux demi-cuves (11, 12) possèdent les mêmes dimensions géométriques et ont une position mutuellement tournée de 180°.

4. Cuve selon une des revendications 1 à 3, caractérisée en ce que les creux convexes (11c, 12c) sont sphériques.

5. Cuve selon une des revendications 1 à 4, caractérisée en ce que les demi-cuves (11, 12) sont réalisées de manière que, à l'état assemblé, elles constituent un corps de cuve (10) en forme de broche, avec des faces externes (11e, 12e) partiellement planes et parallèles, qui se termine par des cônes (11g, 12g, 11f, 12f) aux extrémités extérieures des canaux d'alimentation et d'évacuation (11b, 12b, 11d, 12d).

6. Cuve selon une des revendications 1 à 5, caractérisée en ce que l'une au moins des demi-cuves (11, 12) est en verre, quartz ou saphir.

7. Cuve selon une des revendications 1 à 6, caractérisée en ce que des lentilles (41, 42) plan-convexes sont fixées par cimentage ou à l'explosif sur les faces externes (11e, 12e) planes et parallèles, les surfaces sphériques des lentilles étant couvertes de couches d'un haut pouvoir réfléchissant et d'une transmission résiduelle définie.

8. Cuve selon l'une des revendications 1 à 7, caractérisée en ce qu'un corps prismatique (51) trapézoïdal est fixé à l'explosif ou par cimentage sur une face externe (11e) plane, les faces de trapèze inclinées l'une vers l'autre (52, 53) de ce corps prismatique ayant une forme sphérique et étant couvertes de couches d'un haut pouvoir réfléchissant et d'une transmission résiduelle définie.

9. Cuve selon une des revendications 1 à 6 ou selon la revendication 8, caractérisée en ce qu'une demi-cuvette (12) est en oxyde de béryllium ou nitrure d'aluminium et est pourvue, tout au moins au droit du creux convexe (12c), d'une couche de platine, iridium ou rhodium.

10. Cuve selon la revendication 9, caractérisée en ce que la demi-cuve (12) est reliée à un dispositif de réglage de la température.

Fig.1

# Fig.2b

# Fig.2a

Fig.3a

Fig. 3c

38

37

12e

35b

35

35c

35a

36    34

11    12

Fig. 3b

34    34d  34a  34b    35

35c

35a

12e

37    11e  34c  12    35d

11

Fig.4

Fig.5